# EUROPEAN PATENT SPECIFICATION

(11) **EP 3 542 030 B1**
(45) Date of publication and mention of the grant of the patent: **06.09.2023**
(21) Application number: 17842309.1
(22) Date of filing: 08.11.2017
(51) Int. Cl.: F01D 5/18, F01D 9/06, F01D 5/14, F01D 5/28

(54) **AIRFOIL FOR A TURBINE ENGINE**
TURBINENSCHAUFEL FÜR EIN TURBINENTRIEBWERK
AUBE POUR UN MOTEUR À TURBINE

(30) Priority: 17.11.2016 US 201615354072
(43) Date of publication of application: 25.09.2019
(73) Proprietor: General Electric Company, Schenectady, NY 12345 (US)
(72) Inventor: DYSON, Thomas, Earl, Niskayuna NY 12309 (US); OSUSKY, Lana, Niskayuna NY 12309 (US); RATHAY, Nicholas, Niskayuna NY 12309 (US); LEDEZMA, Gustavo, Niskayuna NY 12309 (US); GETSINGER, Daniel, Los Angeles CA 90034 (US)
(74) Representative: Novagraaf Group
(86) International application number: PCT/US2017/060530
(87) International publication number: WO 2018/093627

(56) References cited:
- EP-A2- 1 087 103
- EP-A2- 1 933 007
- US-A- 4 565 490
- US-A1- 2005 232 769
- US-A1- 2010 068 069

## Description

### FIELD

The subject matter described herein relates to cooling assemblies in turbine airfoils. The invention relates to an airfoil for a turbine engine.

### BACKGROUND

The leading edge region of a turbine airfoil is subjected to some of the highest head loads when an engine is operating. To protect the airfoil from damage, cooling air may be directed in and/or onto the airfoil. Cooling provided by a combination of impingement jets and film cooling air can prevent thermal damage to the airfoils.

One issue with cooling known airfoil assemblies, however, is that an excessive quantity of coolant is required to sufficiently cool the leading edge of the turbine airfoils. Additionally, due to geometric constraints of the leading edge of the airfoil, there are limited strategies for cooling the leading edge of the airfoil as well as downstream from the leading edge.

US 2005/0232769 describes a turbine airfoil with the features of the preamble of claim 1, having a thermally insulating shield wrapping around a nose bridge of the airfoil. US 4 565 490 describes a nozzle for a gas turbine engine, having a vane over the leading edge of the nozzle. EP 1 087 103 describes forward and aft segments of an airfoil, with a gap between them for a cooling fluid.

### BRIEF DESCRIPTION

In one aspect of the invention, there is provided an airfoil according to claim 1.

### BRIEF DESCRIPTION OF THE DRAWINGS

The present inventive subject matter will be better understood from reading the following description of non-limiting embodiments, with reference to the attached drawings, wherein below:
Figure 1 illustrates a perspective view of an airfoil in accordance with one embodiment;
Figure 2 illustrates a cross-sectional view of an airfoil;
Figure 3 illustrates a cross-sectional view of a leading edge of an airfoil;
Figure 4 illustrates a front view of an airfoil ;
Figure 5 illustrates a cross-sectional front view of the airfoil of Figure 4;
Figure 6 illustrates a cross-sectional front view of an airfoil;
Figure 7 illustrates a side view of an airfoil in accordance with one embodiment;
Figure 8 illustrates a cross-sectional front view of the airfoil of Figure 7 in accordance with one embodiment;
Figure 9 illustrates a side view of an airfoil in accordance with one embodiment;
Figure 10 illustrates a cross-sectional front view of the airfoil of Figure 9 in accordance with one embodiment;
Figure 11 illustrates a side view of an airfoil in accordance with one embodiment;
Figure 12 illustrates a cross-sectional front view of the airfoil of Figure 11 in accordance with one embodiment;
Figure 13 illustrates a side view of an airfoil in accordance with one embodiment;
Figure 14 illustrates a cross-sectional front view of the airfoil of Figure 13 in accordance with one embodiment; and
Figure 15 illustrates a flowchart of a method for cooling an airfoil in accordance with one embodiment.

### DETAILED DESCRIPTION

One or more embodiments of the inventive subject matter described herein relate to systems that provide cooling air onto and around surfaces of an airfoil of a turbine assembly. The systems fluidly couple one or more cooling chambers disposed inside of the airfoil with an impingement hole that directs cooling air out of the cooling chambers. A double impingement slot cap assembly is coupled with the airfoil by one or more supports and forms a cover over the impingement hole. The slot cap assembly is separated from the airfoil by opposite slots that are elongated in directions extending along a leading edge or a stagnation region of the airfoil. The cooling air is directed out of the cooling chamber through the impingement hole, and out of the airfoil through the slots along one or more exterior surfaces of the airfoil. The supports direct the cooling air exiting the cooling chamber inside the airfoil around the supports. One technical effect of the subject matter described herein is managing a desired amount, momentum, and direction of cooling air towards one or more exterior surfaces of the airfoil with the supports. One technical effect of the subject matter described herein is improved reduction of hot gas ingestion into the airfoil when the turbine assembly is operating. For example, the systems described herein may improve the reduction of hot gas ingestion into the airfoil when the hot gas mainstream flow is unsteady (e.g., turbulent), when the turbine load is changing, when the turbine assembly is subjected to a passing wake of the hot gas mainstream flow, or the like.

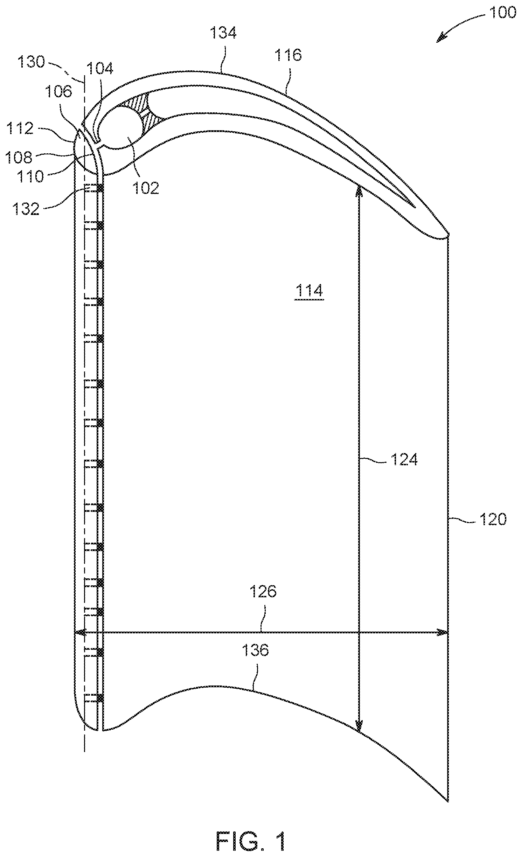

Figure 1 illustrates a perspective view of an airfoil 100 in accordance with one embodiment. The airfoil 100 may be a turbine blade, a stationary guide vane, or the like, used in a turbine assembly (not shown). The airfoil 100 has a pressure side 114 and a suction side 116 that is opposite the pressure side 114. The pressure side 114 and the suction side 116 are interconnected by a leading edge 112 and a trailing edge 120 that is opposite the leading edge 112. The pressure side 114 is generally concave in shape, and the suction side 116 is generally convex in shape between the leading and trailing edges 112, 120. For example, the generally concave pressure side 114 and the generally convex suction side 116 provides an aerodynamic surface over which compressed working fluid flows through the turbine assembly.

The airfoil 100 extends an axial length 126 between the leading edge 112 and the trailing edge 120. The trailing edge 120 is disposed proximate a shaft of the turbine assembly relative to the leading edge 112 along the axial length 126. The airfoil 100 extends a radial length 124 between a first end 134 and a second end 136. For example, the axial length 126 is generally perpendicular to the radial length 124.

A stagnation region 130 is generally parallel with an axis along the radial length 124 of the airfoil. Optionally, the stagnation region 130 may be non-parallel with an axis along the radial length 124. For example, a stagnation region 130 may be non-parallel with an axis along the radial length of a twisted airfoil. The stagnation region 130, positioned at the leading edge 112 between the pressure and suction sides 114, 116, is the region of maximum static pressure that divides fluid flow between the pressure and suction sides 114, 116 of the airfoil 100. For example, hot compressed air transferring through the turbine assembly divides at the stagnation region to flow across the pressure and suction sides 114, 116 in a direction along the axial length 126.

In one or more embodiments, the stagnation region 130 may divide the hot compressed air substantially evenly to flow across the pressure and suction sides 114, 116. Additionally or alternatively, the hot compressed air may or may not be divided substantially evenly to flow across the pressure and suction sides 114, 116. For example, an amount of hot compressed air that flows across the pressure side 114 may be less than, substantially the same as, or greater than an amount of hot compressed air that flows across the suction side 116. Additionally or alternatively, the hot compressed air may or may not be divided substantially evenly to flow across the pressure and suction sides 114, 116 between the first end 134 and the second end 136 of the airfoil 100. For example, at a position of the stagnation region 130 proximate to the first end 134, an amount of hot compressed air that flows across the pressure side 114 may be greater than an amount of hot compressed air that flows across the pressure side 114 at a position of the stagnation region 130 proximate to the second end 136 of the airfoil 100 along the radial length 124. Additionally or alternatively, the amount of hot compressed air that flows across the pressure side 114 and the suction side 116 between the first and second ends 134, 136 along the radial length 124 may be substantially the same or may vary.

The airfoil 100 has an internal cooling chamber 102. The cooling chamber 102 is disposed within the interior of the airfoil 100. For example, the cooling chamber 102 is entirely contained within the airfoil 100 between the pressure side 114 and the suction side 116. In the illustrated embodiment, the cooling chamber 102 is generally round in shape. Optionally, the cooling chamber 102 may be any alternative shape and/or size. The cooling chamber 102 is configured to direct cooling air inside of the airfoil 100 in order to cool the airfoil 100 when the turbine assembly is operating. Optionally, the cooling chamber 102 may direct any form of coolant when the turbine assembly is operating.

The cooling chamber 102 is fluidly coupled with an impingement hole 104. The impingement hole 104 is disposed between the cooling chamber 102 and the leading edge 112 inside of the airfoil 100. For example, the impingement hole 104 is located closer to the leading edge 112 and distal the trailing edge 120 than the cooling chamber 102. The portion of the leading edge 112 that lies beneath the stagnation region 130 is exposed to the highest temperature of the hot compressed gas transferring through the turbine assembly. The impingement hole 104 directs some of the cooling air out of the cooling chamber 102 in a direction towards the leading edge 112. For example, the cooling air is directed through the airfoil 100 in order to cool the leading edge 112 of the airfoil 100. Additionally or alternatively, the cooling air is directed from the cooling chamber 102 through the impingement hole 104 in order to cool one or more exterior surfaces of the airfoil 100 including the leading edge 112, the pressure side 114 surface of the airfoil 100, the suction side 116 surface of the airfoil 100, or the like, when the turbine assembly is operating.

A double impingement slot cap assembly 106 is coupled with the airfoil 100. The slot cap assembly 106 is disposed at the leading edge 112 of the airfoil 100 and forms a cover (e.g., a cap, a hood, a top, or the like) over the impingement hole 104. The slot cap assembly 106 has an external surface 108 and an opposite interior surface 110. The external surface 108 is common with the leading edge 112 of the airfoil 100. For example, the external surface 108 is positioned facing away from the airfoil 100. The interior surface 110 is positioned facing towards the impingement hole 104 that is disposed inside of the airfoil 100. The impingement hole 104 is configured to direct cooling air out of the cooling chamber 102 and towards the interior surface 110 of the slot cap assembly 106. For example, the impingement hole 104 directs cooling air to the interior surface 110 in order to cool the interior surface 110 of the slot cap assembly 106 at or around the stagnation region 130 when the turbine assembly is operating.

The double impingement slot cap assembly 106 is elongated along the stagnation region 130 in a direction along the radial length 124 of the airfoil 100. For example, the slot cap assembly 106 is elongated between the first and second ends 134, 136 of the airfoil 100. In the illustrated embodiment, the slot cap assembly 106 extends a length substantially the same as the radial length 124 of the airfoil 100. Optionally, the slot cap assembly 106 may extend a length that is less than the radial length 124 of the airfoil 100. Additionally, the slot cap assembly 106 is elongated along the leading edge 112 of the airfoil 100. For example, the external and interior surfaces 108, 110 of the slot cap assembly 106 are elongated between the pressure and suction sides 114, 116 of the airfoil.

The double impingement slot cap assembly 106 may comprise and/or be manufactured of a material commonly used in airfoils 100 and/or turbine assemblies. For example, the airfoil 100 and the slot cap assembly 106 may be manufactured of a metal such as a nickel superalloy or a nickel alloy, a ceramic material, or the like. The slot cap assembly 106 and the airfoil 100 may be manufactured a common material. Optionally, the slot cap assembly 106 may be manufactured of a material that is unique to the material of the airfoil 100. Optionally, the slot cap assembly 106 and/or the airfoil 100 may be manufactured out of a combination of multiple, different, materials.

The slot cap assembly 106 is coupled with the airfoil 100 by one or more supports 132 disposed inside of the airfoil 100. The supports 132 may be positioned along the radial length 124 of the airfoil 100. The supports 132 are positioned, shaped and sized to support the mechanical loads for holding the slot cap assembly 106 in place. For example, the supports 132 may be any shape and/or size based on the mechanical and thermal requirements of the turbine assembly. In one or more embodiments, the supports 132 may be cast and/or machined into the airfoil 100, and the slot cap assembly 106 may be welded to the supports 132. Additionally or alternatively, the supports 132 may be cast and/or machined with the slot cap assembly 106, and the supports 132 and the slot cast assembly 106 may be welded to the airfoil 100. Optionally, the supports 132 may be printed directly onto the airfoil 100, printed then welded to the airfoil 100, may be cast with the airfoil 100, may be cast with the slot cap assembly 106, or the like. For example, the airfoil 100 may be cast with a first alloy, and the supports 132 and slot cap assembly 106 may be integrally cast with a second alloy that is different than the first alloy, such that the first alloy may be welded with the second alloy. Optionally, another mechanical fastening method may be used. Additionally or alternatively, the supports 132 may direct the cooling air exiting the cooling chamber 102 inside the airfoil 100. Optionally, the supports 132 may improve the heat transfer between a coolant and the slot cap assembly 106, or the like. The supports 132 will be discussed in more detail below.

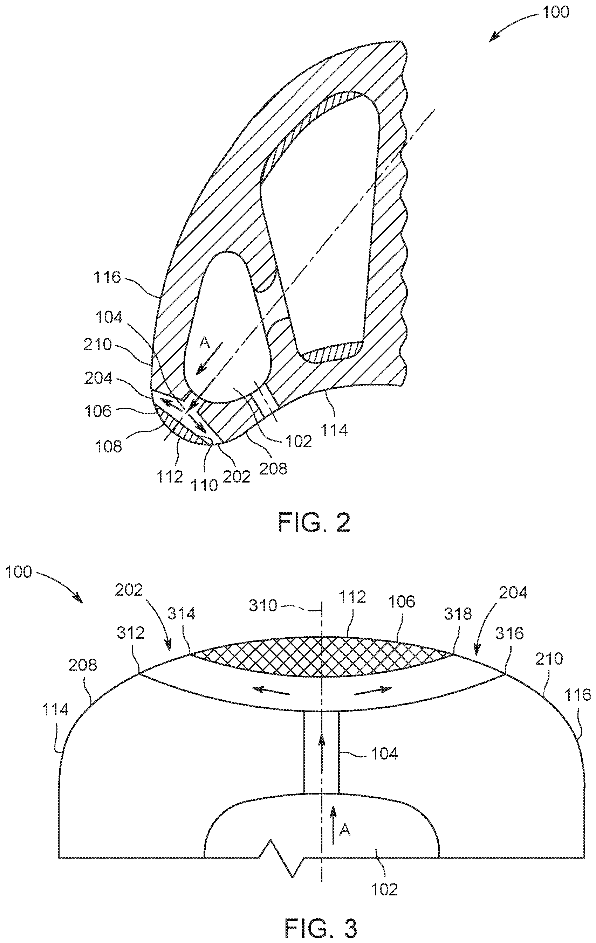

Figure 2 is a cross-sectional view of the airfoil 100. The cooling chamber 102, fluidly coupled with the impingement hole 104, directs cooling air out of the airfoil 100 in a direction A. The slot cap assembly 106 is disposed at the leading edge 112 of the airfoil, such that the slot cap assembly 106 forms a cover over the impingement hole 104.

A first slot 202 and an opposite second slot 204 are fluidly coupled with the impingement hole 104 under the cover of the slot cap assembly 106. The first slot 202 is open to the pressure side 114 of the airfoil 100. For example, the first slot 202 is open to pressure side 114 of the airfoil 100 on a first side of the stagnation region 130 (of Figure 1). The opposite second slot 204 is open to the suction side 116 of the airfoil 100. For example, the second slot 204 is open to the suction side 116 of the airfoil 100 on a second side of the stagnation region 130. The opposite slots 202, 204 are open passages between the impingement hole 104 and the pressure and suction sides 114, 116 of the airfoil 100. For example, cooling air is directed out of the cooling chamber 102, through the impingement hole 104, through the opposite slots 202, 204 to the pressure side 114 and to the opposite suction side 116 of the airfoil 100 as hot compressed air transfers downstream from the stagnation region 130 (e.g., along the axial length 126 of the airfoil 100) when the turbine assembly is operating.

The double impingement slot cap assembly 106 is spaced apart or separated from the airfoil 100 by the opposite slots 202, 204. The opposite slots 202, 204 are elongated in a direction extending along the leading edge 112 of the airfoil 100. For example, the opposite slots 202, 204 extend in a direction generally parallel with the elongated direction of the leading edge 112. Additionally or alternatively, the opposite slots 202, 204 extend in a direction generally perpendicular with the stagnation region 130 (of Figure 1) of the airfoil 100. The opposite slots 202, 204 provide a passage between the cooling chamber 102 and the pressure and suction sides 114, 116 of the airfoil 100 proximate the leading edge 112. For example, the opposite slots 202, 204 are located proximate to the leading edge 112, and positioned between the leading edge 112 and the trailing edge 120 (of Figure 1) along the axial length 126 of the airfoil 100.

The opposite slots 202, 204 direct at least some cooling air exiting the cooling chamber 102 through the impingement hole 104 along a first exterior surface 208 and a different second exterior surface 210 of the airfoil 100. In the airfoil shown in Fig. 2, the first exterior surface 208 is on the pressure side 114 of the airfoil 100, and the second exterior surface 210 is on the suction side 116 of the airfoil 100. The first slot 202, fluidly coupled with the impingement hole 104, directs some of the cooling air out of the cooling chamber 102 and along the first exterior surface 208. For example, the first slot 202 directs at least some of the cooling air to the first exterior surface 208 on the pressure side 114 of the airfoil 100. Additionally, the second slot 204, fluidly coupled with the impingement hole 104, directs some of the cooling air out of the cooling chamber 102 and along the second exterior surface 210. For example, the second slot 204 directs at least some of the cooling air to the second exterior surface 210 on the suction side 116 of the airfoil 100.

Figure 3 is a cross-sectional view of the slot cap assembly 106 at the leading edge 112 of the airfoil 100. The opposite slots 202, 204 fluidly couple the impingement hole 104 with the exterior surfaces of the airfoil 100. For example, the first slot 202 fluidly couples the impingement hole 104 with the first exterior surface 208 of the airfoil 100, and the second slot 204 fluidly couples the impingement hole 104 with the second exterior surface 210 of the airfoil 100.

The impingement hole 104 is elongated along a longitudinal axis 310. The opposite slots 202, 204 are elongated in a direction along the leading edge 112 of the airfoil 100 in a direction generally perpendicular to the longitudinal axis 310. For example, the impingement hole 104 with the opposite slots 202, 204 form a T-shape proximate the leading edge 112 of the airfoil 100. The slot cap assembly 106 is disposed generally centered about the longitudinal axis 310 and forms a cover over the impingement hole 104. The slot cap assembly 106 is separated from the airfoil 100 by the opposite slots 202, 204. The slot cap assembly 106 is separated from the airfoil 100 by the opposite slots 202, 204 in a direction extending along the leading edge 112 of the airfoil 100. For example, the slot cap assembly 106 is disposed a distance apart from the airfoil 100 along the longitudinal axis 310 by a distance equivalent to the size and/or shape of the opposite slots 202, 204. The slot cap assembly 106 is separated from the airfoil 100 by the opposite slots 202, 204 in a direction extending along the stagnation region 130 (of Figure 1). For example, the slot cap assembly 106 is disposed a distance apart from the airfoil 100 between the first end 134 and the second end 136 (of Figure 1) along the stagnation region 130.

The first slot 202 is generally mirrored with the second slot 204 about the longitudinal axis 310. For example, the opposite slots 202, 204 have a common shape and size on opposite sides of the longitudinal axis 310. Optionally, the first slot 202 may have a shape and/or size that is unique to a shape and/or size of the second slot 204. The first and second slots 202, 204 extend generally perpendicular to the longitudinal axis 310. For example, the first and second slots 202, 204 are transversely oriented with respect to the impingement hole 104. Optionally, the first and second slots 204 may be axially oriented with respect to the longitudinal axis 310. Optionally, the first and second slots 204 may extend in a common axial orientation mirrored about the longitudinal axis 310. Optionally, the first slot 202 may extend in a unique orientation with respect to the opposite second slot 204.

The first slot 202 has an opening at the pressure side 114 of the airfoil 100 that is elongated between a first surface 312 and a second surface 314. The second slot 204 has an opening at the suction side 116 of the airfoil 100 that is elongated between a first surface 316 and a second surface 318. In the airfoil shown in Fig. 3, the openings of each of the elongated opposite slots 202, 204 are generally the same shape and size. Optionally, the first slot 202 may have an opening with a unique shape and/or size. For example, a distance between the first and second surfaces 312, 314 of the first slot 202 may be larger or smaller than a distance between the first and second surfaces 316, 318 of the second slot 204. Optionally, a distance between the second surface 314 and the longitudinal axis 310 may be larger or smaller than a distance between the second surface 318 and the longitudinal axis 310. For example, the first slot 202 may have an opening at the pressure side 114 that is positioned closer to the longitudinal axis 310 than the second slot 204.

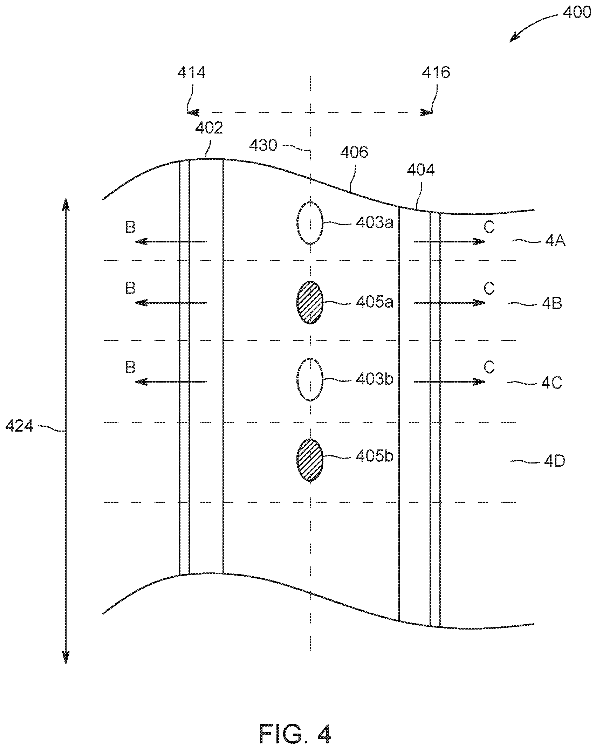

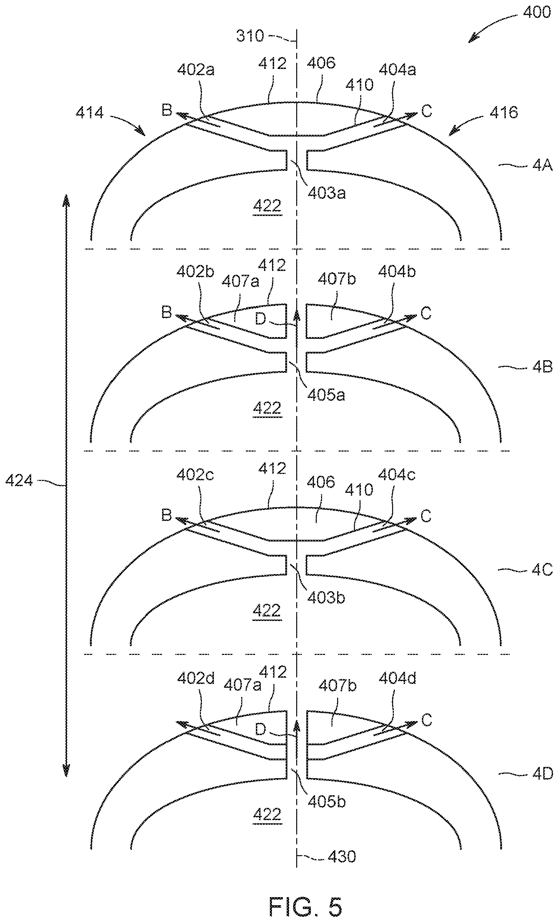

Figure 4 is a front view of an airfoil 400 (corresponding to the airfoil 100 of Figure 1). Figure 5 is a cross-sectional front view of the airfoil 400. Figures 4 and 5 will be discussed together. The airfoil 400 is elongated along a radial length 424 (corresponding to the radial length 124 of Figure 1). The airfoil 400 is illustrated cut into four sections 4A, 4B, 4C, and 4D. A stagnation region 430 (corresponding to the stagnation region 130 of Figure 1) divides the airfoil 400 between a pressure side 414 and a suction side 416. For example, the stagnation region 430 may divide the hot compressed air to flow across the pressure and suction sides 414, 416 when the turbine assembly is operating.

A double impingement slot cap assembly 406 is coupled with the airfoil 400 at a position generally centered about and elongated along the stagnation region 430. Opposite slots 402, 404 are disposed on opposite sides of the stagnation region 430. For example, the first slot 402 is an open passage from the interior of the airfoil 400 to the pressure side 414, and the opposite second slot 404 is a passage from the interior of the airfoil 400 to the suction side 416 of the airfoil 400. At least some of the cooling air flows out of the airfoil 400 from the first slot 402 in a direction B. At least some of the cooling air flows out of the airfoil 400 from the second slot 404 in a direction C. The cooling air flowing in the directions B and C from opposite slots 402, 404 cools the exterior surfaces of the airfoil 400 on opposite sides of the stagnation region 430. For example, the cooling air flowing in the direction B from the first slot 402 cools the exterior surface of the pressure side 414 of the airfoil 100, and the cooling air flowing in the direction B from the second slot 404 cools the exterior surface of the suction side 416 of the airfoil 100. In the airfoil shwon in Fig. 4, the opposite slots 402, 404 are illustrated as continuous passages that are open between a position inside of the airfoil 400 to the exterior surfaces of the airfoil 400. Optionally, one or more sections (4A-4D) may not have opposite slots 402, 404 along the radial length 424.

Turning to Figure 5, the four sections 4A-D are illustrated as sliced cross-sectional views of the airfoil 400 along the radial length 424 of the airfoil 400 along the stagnation region 430. Section 4A has a first pair of opposite slots 402a, 404a fluidly coupled with a first impingement hole 403a. The opposite slots 402a, 404a are transversely oriented with respect to the first impingement hole 403a. Cooling air is directed from a cooling chamber 422 (corresponding to the cooling chamber 102 of Figure 1), through the impingement hole 403a, and at least some of the cooling air is directed through the first slot 402a to the pressure side 414 of the airfoil 400, and at least some of the cooling air is directed through the second slot 404a to the suction side of the airfoil 400.

Section 4B illustrates an alternative configuration of the slot cap assembly 406 along the radial length 424 of the airfoil 400. Section 4B has a second pair of opposite slots 402b, 404b. The slots 402b, 404b are fluidly coupled with a first cap film hole 405a. The first cap film hole 405a is fluidly coupled with a cooling chamber inside of the airfoil 400 to direct cooling air exiting the cooling chamber 422 to a leading edge 412 of the airfoil 400. The size and/or shape of the first cap film hole 405a may vary. For example, at least some of the cooling air exiting the cooling chamber 422 is directed through the first slot 402b to the pressure side 414, at least some of the cooling air is directed through the second slot 404b to the suction side 416, and at least some of the cooling air is directed through the first cap film hole 405a to the leading edge 412 of the airfoil 400. For example, the first cap film hole 405a directs cooling air exiting the cooling chamber 422 to the stagnation region 430 in a direction D. In the airfoil shown in Fig. 4, the first cap film hole 405a is positioned substantially centered with the stagnation region 430 such that the first cap film hole 405a divides the double impingement slot cap assembly 406 at the stagnation region 430. For example, the double impingement slot cap assembly 406 is divided into a first half 407a and an opposite second half 407b by the first cap film hole 405a at the leading edge 412 of the airfoil 400.. Optionally, the first cap film hole 405a may not be substantially centered with the stagnation region 430. For example, the first cap film hole 405a may be positioned closer to the pressure side 414 than the suction side 416, or closer to the suction side 416 than the pressure side 414.

Continuing along the radial length 424 of the airfoil 400, section 4C has a configuration similar to section 4A. For example, section 4C has a third pair of opposite slots 402c, 404c that are fluidly coupled with a second impingement hole 403b. In the airfoil shown in Fig. 4, the first and second impingement holes 403a, 403b have a substantially common size. Additionally or alternatively, one or more of the impingement holes 403a, 403b may be a larger or wider passage to direct cooling air from the cooling chamber towards an interior surface 410 of the slot cap assembly 406.

Continuing along the radial length 424 of the airfoil 400, section 4D illustrates an alternative configuration of the slot cap assembly 406. Section 4D has a second cap film hole 405b fluidly coupled with a cooling chamber 422 inside of the airfoil 400 to direct cooling air exiting the cooling chamber 422 to the leading edge 412. The size and/or shape of the second cap film hole 405b may vary. In the illustrated embodiment, the second cap film hole 405b directs cooling air from the cooling chamber 422 through the second cap film hole 405b to the leading edge 412 of the airfoil 400 and does not direct cooling air through slots to the pressure or suction sides 414, 416. For example, the second cap film hole 405b is not fluidly coupled with opposite slots 402d, 404d. The second cap film hole 405b directs cooling air exiting the cooling chamber 422 to the stagnation region 430 in the direction D. In the airfoil shown in Fig. 4, the first and second cap film holes 405a, 405b are open passages directing cooling air outside of the airfoil 400 to the stagnation region 430 along the double impingement slot cap assembly 406 in alternating sections 4B and 4D.

In Figures 4 and 5, section 4B illustrates the first cap film hole 405a fluidly coupled with both the first and second slots 402b, 404b, Section 4D illustrates the second cap film hole 405b not fluidly coupled with first and second slots 402d, 404d. Optionally, the first and second cap film holes 405a, 405b may be fluidly coupled with one or more opposite slots. For example, the first cap film hole 405a may be fluidly coupled with the first slot 402a but not the second slot 404b. Optionally, the first and second cap film holes 405a, 405b may not be fluidly coupled with the opposite slots. For example, the first cap film hole 405a may not be fluidly coupled with opposite slots 402b, 404b. Optionally, the first cap film hole 405a may be fluidly coupled with first and/or second slots in any uniform or unique combination to the second cap film hole 405b. Optionally, the first or second cap film holes 405a, 405b may be generally centered about the stagnation region 430 or may not be generally centered about the stagnation region 430. Optionally, one or more of sections 4A and/or 4C may also include a cap film hole.

Figures 4 and 5 illustrate an airfoil 400 including four sections (4A-D) of the slot cap assembly 406 having an alternating pattern along the radial length 424 of the airfoil 400. Alternatively, the airfoil 400 may include any number of sections and/or the sections may be configured in any order or pattern (e.g., alternating, non-alternating, random, or the like). Optionally, the airfoil 400 may have any alternative alternating and/or non-alternating section configuration. For example, the airfoil 400 may have a configuration with the order of sections being 4A-4B-4D-4C, 4A-4C-4B-4D, or the like.

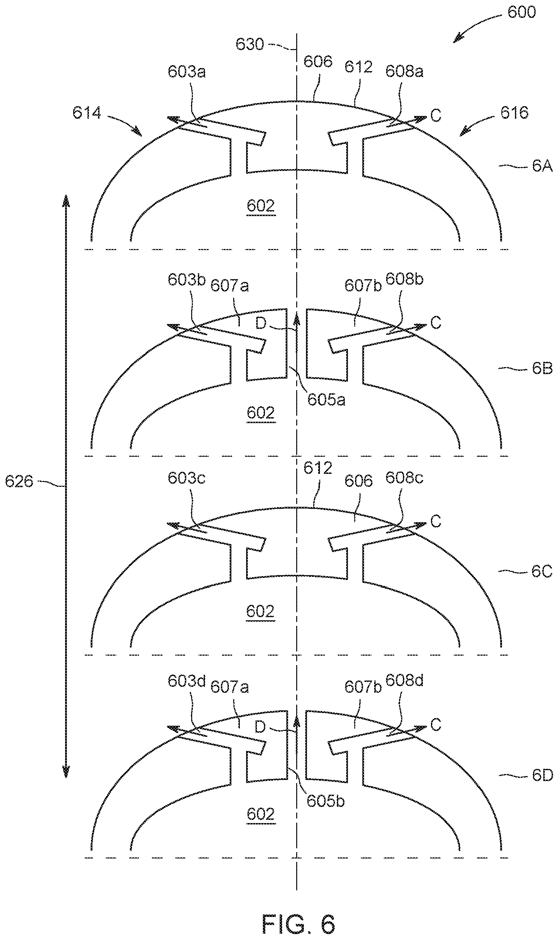

Figure 6 illustrates a cross-sectional front view of an airfoil 600 for comparative purposes. The airfoil 600 is divided into four sections 6A-D (corresponding to sections 4A-D of Figures 4 and 5) along a radial length 624 of the airfoil 600 along a stagnation region 630. Section 6A has a first pair of opposite metering slots 603a, 608a. The opposite metering slots 603a, 608a are fluidly coupled with a cooling chamber 602 (corresponding to the cooling chamber 102 of Figure 1). A double impingement slot cap assembly 606 is coupled to the airfoil 600 and forms a cover at a leading edge 612 of the airfoil 600. The slot cap assembly 606 is separated from the airfoil 600 by the opposite metering slots 603, 608. The opposite metering slots 603, 608 direct cooling air exiting the cooling chamber 602 to one or more exterior surfaces of the airfoil 600. For example, the first metering slot 603a directs cooling air to a pressure side 614 of the airfoil 600 in a direction B. Additionally, the second metering slot 608a directs cooling air to a suction side 616 of the airfoil 600 in a direction C. The airfoil 600 is devoid an impingement hole. For example, the cooling chamber 602 is fluidly coupled directly to the opposite metering slots 603, 608 to direct cooling air from the cooling chamber 602 to the exterior surfaces of the airfoil 600.

Section 6B illustrates a configuration that is alternative of the configuration of section 4A of the double impingement slot cap assembly 606 along the radial length 624. Section 6B has a second pair of opposite metering slots 603b, 608b. The metering slots 603b, 608b are fluidly coupled with the cooling chamber 602. A first cap film hole 605a (corresponding to the first cap film hole 405a of Figure 5) is fluidly coupled with the cooling chamber 602. The first metering slot 603b directs at least some of the cooling air exiting the cooling chamber 602 to the pressure side 614, the opposite second metering slot 608b directs at least some of the cooling air to the suction side 616, and the first cap film hole 605a directs at least some of the cooling air from the cooling chamber 602 to the leading edge 612 of the airfoil 600. For example, the first cap film hole 605a directs cooling air exiting the cooling chamber 602 to the stagnation region 630 in a direction D. The first cap film hole 605a is positioned substantially centered about the stagnation region 630 and divides the double impingement slot cap assembly 606 at the stagnation region 630. For example, the double impingement slot cap assembly 606 is divided into a first half 607a and an opposite second half 607b by the first cap film hole 605a at the leading edge 612. Optionally, the first cap film hole 605a may not be substantially centered with the stagnation region 630. For example, the first cap film hole 605a may be positioned closer to the pressure side 614 than the suction side 616, or closer to the suction side 616 than the pressure side 614.

Continuing along the radial length 624 of the airfoil 600, section 6C has a configuration similar to section 6A, and section 6D has a configuration similar to section 6B. For example, section 6C has a third pair of opposite metering slots 603c, 608c that are fluidly coupled with the cooling chamber 602, and section 6D has a fourth pair of opposite metering slots 603d, 608d, and a second film cooling hole 605b that are fluidly coupled with the cooling chamber 602.

Section 6B illustrates the first cap film hole 605a and both the first and second slots 603b, 608b fluidly coupled with the cooling chamber 602. Optionally, section 6B may include the first cap film hole 605a and less than two metering slots fluidly coupled with the cooling chamber 602. For example, the cooling chamber 602 may be fluidly coupled with the first metering slot 603a but not the second metering slot 608b.

Figure 6 illustrates one example of the airfoil 600 including four sections (6A-D) having an alternating pattern. Alternatively, the airfoil 600 may include any number of sections and/or the sections may be configured in any order or pattern (e.g., alternating, non-alternating, random, or the like). For example, any section may include less than two or more than two metering slots. Optionally, the airfoil 600 may have any alternative alternating section configuration. For example, the airfoil 600 may have a configuration with the order of sections being 6A-6B-6D-6C, 6A-6C-6B-6D, or the like.

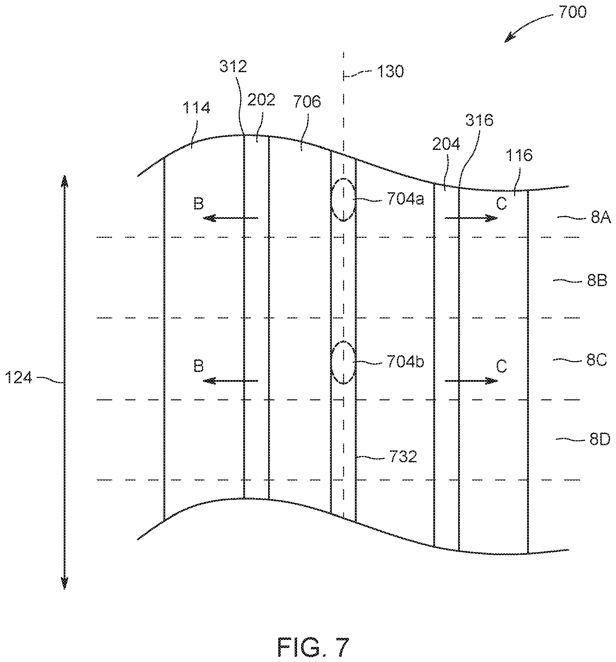

In one or more embodiments, the supports 132 (of Figure 1) operably couple the slot cap assembly 106 to the airfoil 100. In accordance with the invention as presently claimed, supports 132 direct the cooling air exiting the cooling chamber 102 around the supports 132 in order to cool the one or more exterior surfaces of the airfoil 100. For example, the supports 132 may control an amount of cooling air exiting the cooling chamber, may control an amount of momentum of the cooling air that is exiting the cooling chamber 102, may divide and/or diffuse the cooling air that is exiting the cooling chamber 102, may control an amount of pressure inside of one or more of the opposite slots (e.g., the slots 202, 204), may block or prevent the flow of cooling air towards one or more different exterior surfaces of the airfoil, may allow the flow of cooling air towards one or more different exterior surfaces of the airfoil, or the like. Figures 7 through 14 illustrate examples of the one or more supports 132 directing the cooling air exiting the cooling chamber 102 in order to cool the one or more exterior surfaces of the airfoil.

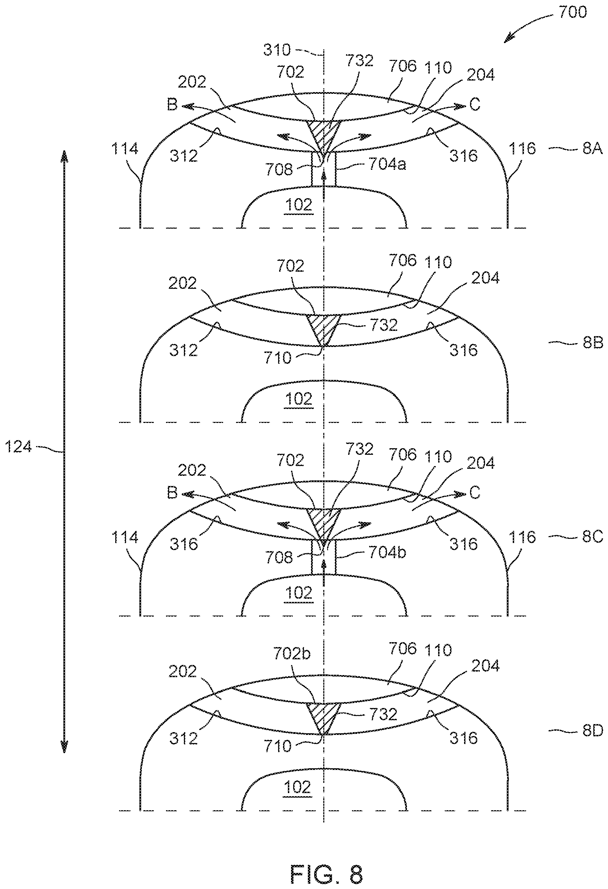

Figure 7 is a side view of an airfoil 700 (corresponding to the airfoil 100 of Figure 1) in accordance with one embodiment. Figure 8 is a cross-sectional front view of the airfoil 700. Figures 7 and 8 illustrate the airfoil 700 that includes a support 732 that couples a double impingement slot cap assembly 706 with the airfoil 700 and directs cooling air around the support 732 in accordance with one embodiment. Figures 7 and 8 will be discussed together.

The airfoil 700 is elongated along the radial length 124. The airfoil 700 is illustrated cut into four sections 8A, 8B, 8C, and 8D. The stagnation region 130 divides the airfoil 700 between the pressure side 114 and the suction side 116. The slot cap assembly 706 is coupled with the airfoil 700 at a position generally centered about and elongated along the stagnation region 130. The opposite slots 202, 204 are disposed on opposite sides of the stagnation region 130. The support 732 is elongated along and generally centered about the stagnation region 130 along the radial length 124 of the airfoil 700. Optionally, the support 732 may not be positioned generally centered about the stagnation region 130. The support 732 extends continuously along the radial length 124 of the airfoil 700 between first and second ends (e.g., 134, 136 illustrated in Figure 1) of the airfoil 700. Additionally or alternatively, one or more supports 732 may extend semi-continuously, randomly, independently, or the like, between the first and second ends of the airfoil 700.

The opposite slots 202, 204 fluidly coupled an impingement hole 704 with the exterior surfaces of the airfoil 700. The impingement hole 704 is elongated along and generally centered about the longitudinal axis 310. The opposite slots 202, 204 are elongated in a direction along the leading edge (e.g., the leading edge 112 illustrated in Figure 3) of the airfoil 700 in a direction generally perpendicular to the longitudinal axis 310. The slot cap assembly 706 is disposed generally centered about the longitudinal axis 310 and forms a cover over the impingement hole 704.

As illustrated in Figure 8, the support 732 extends to semi-continuous partial height distances away from the interior surface 110 of the slot cap assembly 706. For example, the support 732 extends between a first surface 702 and a splitter end 708, illustrated in sections 8A and 8C, and extends between the first surface 702 and a mating surface 710, illustrated in sections 8B and 8D. Additionally, the support 732 is elongated along and is generally centered about the longitudinal axis 310. In the illustrated embodiment, the support 732 has a substantially triangular or conical cross-sectional shape. Optionally, the support 732 may have any alternative uniform or non-uniform cross-sectional shape or size. For example, the support 732 may have a substantially rectangular cross-sectional shape that extends between the first surface 702 an opposite free end a distance away from the interior surface 110, with a substantially triangular splitter end 708 extending from the free end and protruding into the impingement hole 704. Optionally, the support 732 may have any alternative cross-sectional shape and/or size that may promote the cooling air to spread towards one or more interior or exterior surfaces of the airfoil 700.

The first surface 702 of the support 732 is operably coupled with the interior surface 110 of the slot cap assembly 706. For example, the first surface 702 of the support 732 may be welded to, machined into, integrally cast with, printed onto, or the like, the interior surface 110 of the slot cap assembly 706. The support 732 extends a distance away from the interior surface 110 of the slot cap assembly 706. In the illustrated embodiment, the splitter end 708 of the support 732 extends a distance that is greater than a distance between the interior surface 110 of the slot cap assembly 706 and the first surfaces 312, 316 of the opposite slots 202, 204 along the longitudinal axis 310. For example, the splitter end 708 of the support 732 extends into the impingement hole 704. Additionally or alternatively, the support 732 may extend a lesser (e.g., shorter) distance (e.g., the splitter end 708 may not extend into the impingement hole 704), may extend a greater (e.g., longer) distance into the impingement hole 704, or the like.

Turning to Figure 8, the four sections 8A-D are illustrated as sliced cross-sectional views of the airfoil 700 along the radial length 124 of the airfoil 700. Section 8A has an impingement hole 704a that extends between the cooling chamber 102 and the opposite slots 202, 204. Cooling air is directed from the cooling chamber 102 and through the impingement hole 704a. The first surface 702 of the support 732 is coupled with the interior surface 110 of the slot cap assembly 706. The splitter end 708 of the support 732 extends a distance away from the interior surface 110 of the slot cap assembly 706 in a direction towards the impingement hole 704a such that the splitter end 708 of the support 732 extends or protrudes into the impingement hole 704a. Optionally, section 8A may include any number of impingement holes 704 that may direct cooling air from the cooling chamber 102, and the support 732 may include any number of splitter ends 708 that may protrude into the impingement holes 704 in order to direct and/or divide the flow of cooling air that is exiting the cooling chamber 102.

The splitter end 708 of the support 732 of section 8A directs at least some of the cooling air towards the first slot 202 in the direction B in order to cool the pressure side 114 exterior surface of the airfoil 700, and at directs least some of the cooling air towards the second slot 204 in the direction C in order to cool the suction side 116 exterior surface of the airfoil 700. For example, the cooling air exiting the cooling chamber 102 is directed around the support 732 and out of the airfoil 700 onto different exterior surfaces of the airfoil 700. Additionally or alternatively, the splitter end 708 of the support 732 may be shaped and sized in order to direct a larger amount of cooling air towards the first slot 202 than an amount of cooling air towards the second slot 204, or may direct a larger amount of cooling air towards the second slot 204 than an amount of cooling air towards the first slot 202. Additionally or alternatively, the splitter end 708 may not be generally centered with the impingement hole 704a. For example, the splitter end 708 may extend into the impingement hole 704a at a position closer to the pressure side 114 of the airfoil 700, at a position closer to the suction side 116 of the airfoil 700, or the like.

Section 8B illustrates an alternative configuration of the slot cap assembly 706 along the radial length 124 of the airfoil 700. Section 8B is devoid an impingement hole. Optionally, section 8B may include one or more impingement holes. In section 8B, the support 732 extends along the longitudinal axis 310 between the first surface 702 and the mating surface 710. The first surface 702 of the support 732 is coupled with the interior surface 110 of the slot cap assembly 706. The mating surface 710 of the support 732 is coupled with the first surfaces 312, 316 of the opposite slots 202, 204. For example, the support 732 at section 8B couples the slot cap assembly 706 with the airfoil 700.

Continuing along the radial length 124 of the airfoil 700, section 8C has a configuration similar to section 8A. For example, the first surface 702 of the support 732 is coupled with the interior surface 110 of the slot cap assembly 706, and the splitter end 708 of the support 732 extends a distance away from the interior surface 110 of the slot cap assembly 706. In the illustrated embodiment of Figure 8, the splitter end 708 of section 8A and the splitter end 708 of section 8C extend substantially the same distance away from the slot cap assembly 706. Optionally, one or more of the splitters ends 708 may extends a distance greater or less than one or more alternative splitter ends 708 of the support 732. Optionally, the support 732 may extend between the first surface 702 and the mating surface 710 at section 8C. For example, the support 732 may not extend into the impingement hole 704b.

The splitter end 708 of section 8C directs at least some of the cooling air towards the first slot 202 in the direction B in order to cool the pressure side 114 exterior surface of the airfoil 700, and at directs least some of the cooling air towards the second slot 204 in the direction C in order to cool the suction side 116 exterior surface of the airfoil 700. For example, the cooling air exiting the cooling chamber 102 is directed around the splitter end 708 of the support 732 and out of the airfoil 700.

Continuing along the radial length 124, section 8D has a configuration similar to section 8B. For example, section 8D is devoid an impingement hole and the support 732 extends between the first surface 702 and the mating surface 710. The first surface 702 of the support 732 is coupled with the interior surface 110 of the slot cap assembly 706, and the mating surface 710 of the support 732 is coupled with the first surfaces 312, 316 of the opposite slots 202, 204. For example, the support 732 at section 8D couples the slot cap assembly 706 with the airfoil 700.

Figures 7 and 8 illustrate one example of the airfoil 700 including four sections (8A-D) of the slot cap assembly 706 having an alternating pattern along the radial length 124 of the airfoil 700. For example, sections 8A and 8C include impingement holes 704a, 704b, and sections 8B and 8D are devoid impingement holes. Optionally, any number of sections of the airfoil 700 may include one or more impingement holes that are generally centered about the longitudinal axis 310, one or more impingement holes that are generally not centered about the longitudinal axis 310, that are mirrored about the longitudinal axis 310, or the like. Additionally or alternatively, the airfoil 700 may include any number of impingement holes at any section of the airfoil 700 that may direct cooling air out of the cooling chamber and onto different exterior surfaces of the airfoil 700. For example, section 8A may include any number of impingement holes with one or more splitter ends 708 of the support 732 extending into one or more of the plural impingement holes. Additionally or alternatively, the splitter ends 708 of the support 732 may extend generally centered about the longitudinal axis 310, may extend into the impingement hole 704 off-centered with the longitudinal axis 310, any number of splitter ends 708 may have a unique and/or common shape or size, or any combination therein. Additionally, the airfoil 700 may include any number of sections and/or the sections may be configured in any order or pattern (e.g., alternating, non-alternating, random, or the like). For example, the airfoil 700 may have any alternative configuration along the radial length 124, such as 8A-8D-8B-8C, 8D-8A-8C-8B, 8A-8B-8B-8B, 8B-8A-8A-8A, or the like.

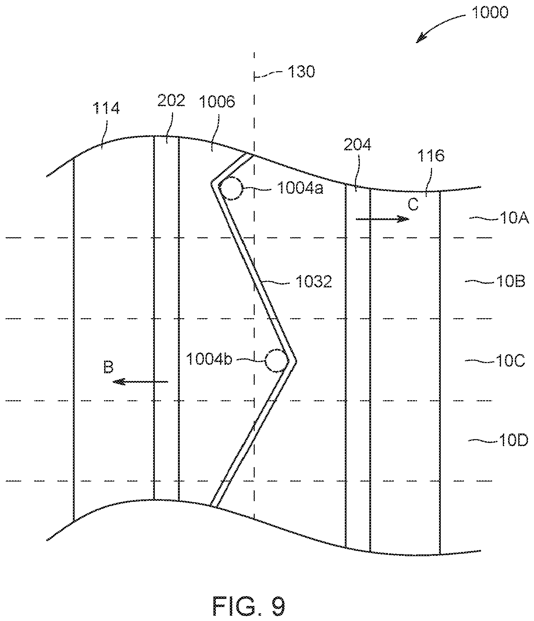

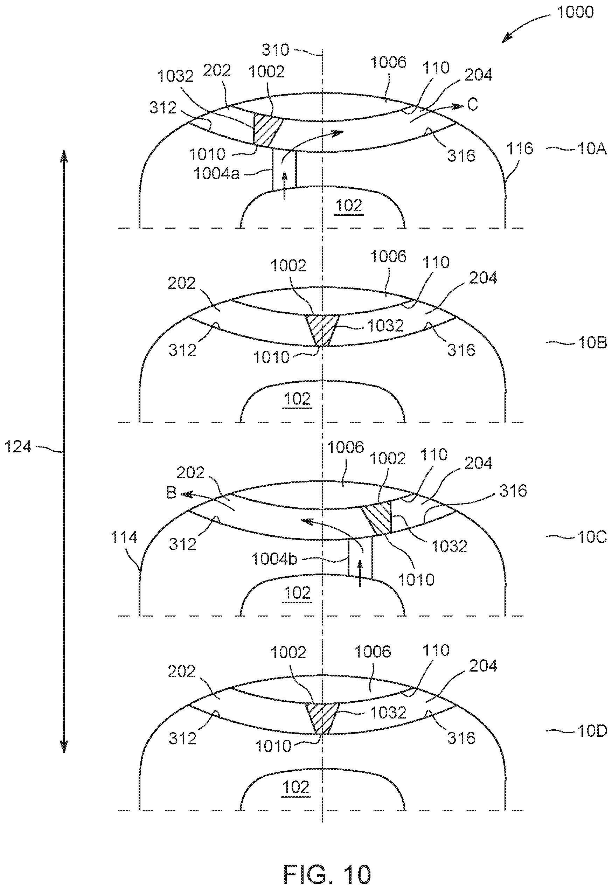

Figure 9 is a side view of an airfoil 1000 (corresponding to the airfoil 100 of Figure 1) in accordance with one embodiment. Figure 10 is a cross-sectional front view of the airfoil 1000. Figures 9 and 10 illustrate the airfoil 1000 that includes one or more supports 1032 that couple a double impingement slot cap assembly 1006 with the airfoil 1000 and direct cooling air along different exterior surfaces of the airfoil 1000 in accordance with one embodiment. Figures 9 and 10 will be discussed together.

The airfoil 1000 is elongated along the radial length 124. The airfoil 1000 is illustrated cut into four sections 10A, 10B, 10C, and 10D. The stagnation region 130 divides the airfoil 1000 between the pressure and suction sides 114, 116. The double impingement slot cap assembly 1006 is coupled to the airfoil 1000 at a position generally centered about and elongated along the stagnation region 130. The opposite slots 202, 204 are disposed on opposite sides of the stagnation region 130.

The airfoil 1000 includes the support 1032 that is disposed inside of the airfoil 1000. The support 1032 extends along the radial length 124 of the airfoil 1000 in a zig-zag alternating pattern between the first and second ends (e.g., 134, 136 illustrated in Figure 1) of the airfoil 1000 across the stagnation region 130. In the illustrated embodiment, the support 1032 extends continuously in the zig-zag pattern along the radial length 124. For example, the support 1032 is continuous between sections 10A-10D as a unitary embodiment. Additionally or alternatively, the airfoil 1000 may include any number of supports 1032 that extend along one or more of the sections 10A-10D in any elongated, zig-zag, straight, or angular configuration. Additionally or alternatively, the airfoil 1000 may include a first support 1032 in section 10A that extends in a direction generally parallel with and not centered about the stagnation region 130, or the like. Additionally or alternatively, the support 1032 may extend semi-continuously, randomly, independently, or the like, between the first and second ends of the airfoil 1000.

Turning to Figure 10, the four sections 10A-D are illustrated as sliced cross-sectional views of the airfoil 1000 along the radial length 124 of the airfoil 1000. Section 10A has an impingement hole 1004a that extends in a direction along the longitudinal axis 310 between the cooling chamber 102 and the opposite slots 202, 204. The impingement hole 1004a is disposed at a position between the longitudinal axis 310 and the first slot 202. For example, the impingement hole 1004a is not generally centered about the longitudinal axis 310.

The support 1032 extends between a first surface 1002 and a mating surface 1010. The first surface 1002 of the support 1032 is coupled with the interior surface 110 of the slot cap assembly 1006. The support 1032 extends a distance away from the interior surface 110 of the slot cap assembly 1006. For example, the support 1032 extends a distance away that is substantially equal to the distance between the interior surface 110 and the first surface 312 of the first slot 202. The mating surface 1010 of the support 1032 is coupled with the first surface 312 of the first slot 202. For example, the support 1032 at section 10A couples the slot cap assembly 1006 with the airfoil 1000.

Cooling air is directed from the cooling chamber 102 and through the impingement hole 1004a. The support 1032 is disposed at a position between the first slot 202 and the impingement hole 1004a. For example, the support 1032 extends within the first slot 202 such that the support 1032 prevents (e.g., blocks) cooling air from being directed through the first slot 202. Alternatively, the support 1032 directs at least some of the cooling air towards the second slot 204 in the direction C in order to cool the suction side 116 exterior surface of the airfoil 1000. For example, the support 1032 directs the cooling air exiting the cooling chamber 102 out of the airfoil 1000. Optionally, section 10A may include any number of impingement holes 1004 that may direct cooling air from the cooling chamber 102 and towards the second slot 204.

Section 10B illustrates an alternative configuration of the slot cap assembly 1006 along the radial length 124 of the airfoil 1000. Section 10B is devoid an impingement hole. Optionally, section 10B may include one or more impingement holes. In section 10B, the support 1032 extends generally centered about and along the longitudinal axis 310 between the first surface 1002 and the mating surface 1010. The first surface 1002 of the support 1032 is coupled with the interior surface 110 of the slot cap assembly 1006. The mating surface 1010 of the support 1032 is coupled with the first surfaces 312, 316 of the opposite slots 202, 204. For example, the mating surface 1010 of the support 1032 couples the slot cap assembly 1006 with the airfoil 1000.

Continuing along the radial length 124 of the airfoil 1000, section 10C has a configuration that is generally mirrored with the configuration of section 10A about the longitudinal axis 310. For example, section 10C includes an impingement hole 1004b that extends in a direction along the longitudinal axis 310 between the cooling chamber 102 and the opposite slots 202, 204. The impingement hole 1004b is disposed at a position between the longitudinal axis 310 and the second slot 204. For example, the impingement hole 1004b is not generally centered about the longitudinal axis 310.

The support 1032 extends between the first surface 1002 and the mating surface 1010. The first surface 1002 of the support 1032 is coupled with the interior surface 110 of the slot cap assembly 1006. The mating surface 1010 of the support 1032 is coupled with the first surface 316 of the second slot 204. For example, the support 1032 couples the slot cap assembly 1006 with the airfoil 1000.

Cooling air is directed from the cooling chamber 102 and through the impingement hole 1004b. The support 1032 is disposed at a position between the second slot 204 and the impingement hole 1004b. For example, the support 1032 extends within the second slot 204 such that the support 1032 prevents (e.g., blocks) cooling air from being directed through the second slot 204. Alternatively, the support 1032 directs at least some of the cooling air towards the first slot 202 in the direction B in order to cool the pressure side 114 exterior surface of the airfoil 1000. For example, the support 1032 directs the cooling air exiting the cooling chamber 102 out of the airfoil 1000. Optionally, section 10C may include any number of impingement holes 1004 that may direct cooling air from the cooling chamber 102 and towards the first slot 202.

Continuing along the radial length 124, section 10D has a configuration similar to section 10B. For example, section 10D is devoid an impingement hole and the support 1032 extends between the first surface 1002 and the mating surface 1010. Optionally, section 10D may include one or more impingement holes. The first surface 1002 of the support 1032 is coupled with the interior surface 110 of the slot cap assembly 1006, and the mating surface 1010 of the support 1032 is coupled with the first surfaces 312, 316 of the opposite slots 202, 204. For example, the support 1032 couples the slot cap assembly 1006 with the airfoil 1000.

Figures 9 and 10 illustrate one example of the airfoil 1000 including four sections (10A-D) of the slot cap assembly 1006 having an alternating pattern along the radial length 124 of the airfoil 1000. For example, sections 10A and 10C include impingement holes 1004a, 1004b and sections 10B and 10D are devoid impingement holes. Optionally, any number of sections of the airfoil 1000 may include any number of impingement holes. For example, section 10B may include an impingement hole that extends generally centered along the longitudinal axis 310. Additionally or alternatively, the airfoil 1000 may include any number of impingement holes at any section of the airfoil 1000 that may direct cooling air out of the cooling chamber and onto different exterior surfaces of the airfoil 1000. The support 1032 may block, or prevent cooling air from exiting the cooling chamber 102 through the one or more impingement holes. Optionally, the airfoil 1000 may include any number of sections and/or the sections may be configured in any order or pattern (e.g., alternating, non-alternating, random, or the like).

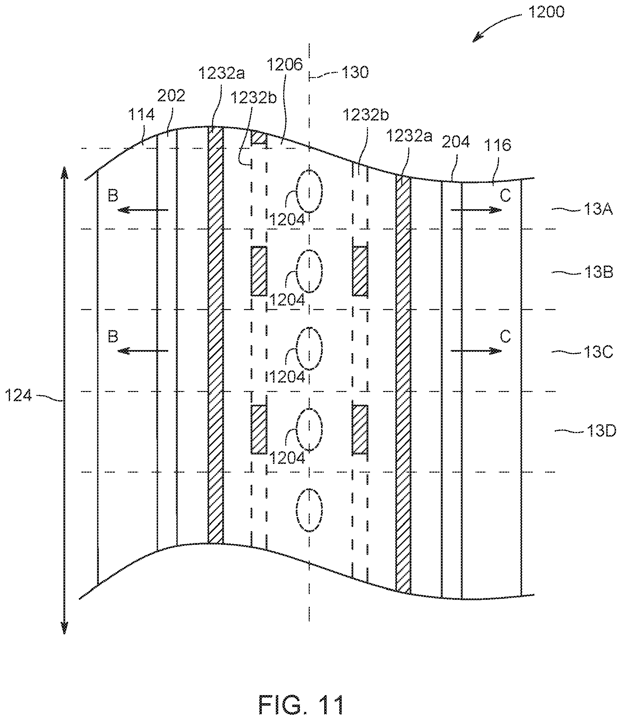

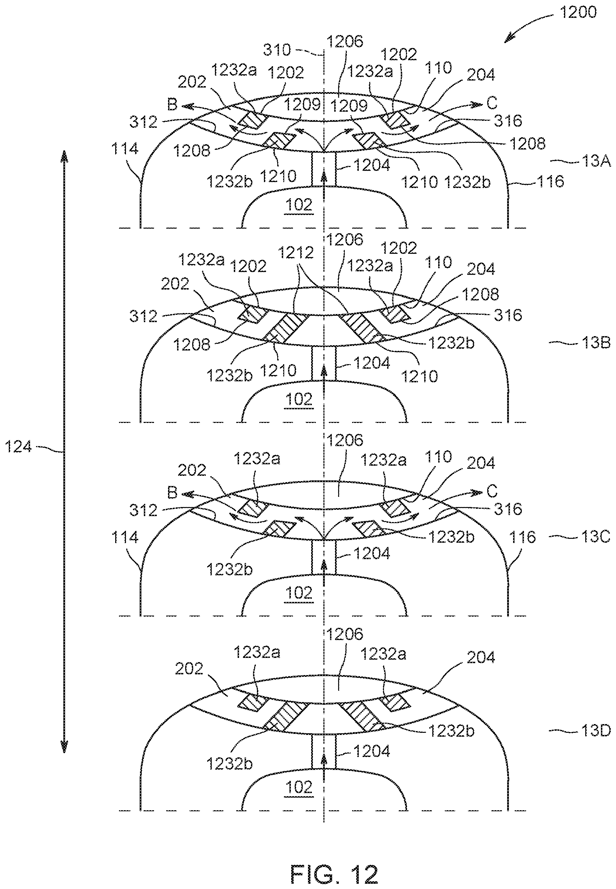

Figure 11 is a side view of an airfoil 1200 (corresponding to the airfoil 100 of Figure 1) in accordance with one embodiment. Figure 12 is a cross-sectional front view of the airfoil 1200. Figures 11 and 12 illustrate the airfoil 1200 that includes one or more supports 1232 that couple a double impingement slot cap assembly 1206 with the airfoil 1200 and direct cooling air around the supports 1232 in accordance with one embodiment. Figures 11 and 12 will be discussed together.

The airfoil 1200 includes four supports 1232 that are disposed inside of the airfoil 1200. In the illustrated embodiment, two of the supports 1232 are disposed on a first side of an impingement hole 1204 (e.g., on a first side of the stagnation region 130) between the impingement hole 1204 and the first slot 202. Additionally, two of the supports 1232 are disposed on a second side of the impingement hole 1204 (e.g., on a second side of the stagnation region 130) between the impingement hole 1204 and the second slot 204. Additionally or alternatively, less than two or more than two supports 1232 may be disposed on either side of the impingement hole 1204. Optionally, the airfoil 1200 may include any number of supports 1232 that are disposed on either side of the impingement hole 1204 inside of the airfoil 1200. In the illustrated embodiment, the supports 1232 are uniform and have a generally cubical in shape. Additionally or alternatively, one or more of the supports 1232 may have any alternative uniform and/or non-uniform shape and/or size.

The supports 1232 include two upper supports 1232a and two lower supports 1232b. The upper supports 1232a extend between a first surface 1202 and a second surface 1208. The first surface 1202 of each of the upper supports 1232a is coupled with the interior surface 110 of the slot cap assembly 1206. The upper supports 1232a extend a distance away from the interior surface 110 of the slot cap assembly 1206. For example, the upper supports 1232a extend a distance into the slots 202, 204 and towards the inside of the airfoil 1200. The upper supports 1232a extend continuously along the radial length 124 of the airfoil 1200 between first and second ends (e.g., 134, 136 illustrated in Figure 1) of the airfoil 1200. Additionally or alternatively, the upper supports 1232a may extend semi-continuously, randomly, or the like, between the first and second ends of the airfoil 700. Additionally, between the first and second ends of the airfoil 1200, the upper supports 1232a extend a continuous partial height distance away from the interior surface 110 of the slot cap assembly 1206. For example, the distance between the first surface 1202 and the second surface 1208 of the upper supports 1232a remains generally the same between the first and second ends of the airfoil 1200 along the radial length 124. Optionally, the distance between the first and second surfaces 1202, 1208 may vary semi-continuously, randomly, or the like, between the first and second ends of the airfoil 1200.

The lower supports 1232b extend a distance away from the first surfaces 312, 316 of the opposite slots 202, 204. For example, the lower supports 1232b extend a distance into the slots 202, 204 and towards the interior surface 110 of the slot cap assembly 1206. The lower supports 1232b extend continuously along the radial length 124 of the airfoil 1200 between the first and second ends of the airfoil 1200. Additionally, between the first and second ends of the airfoil 1200, the lower supports 1232b extend to semi-continuous partial height distances away from the first surfaces 312, 316 of the opposite slots 202, 204. For example, the lower supports 1232b extend between a mating surface 1210 and a first surface 1209, illustrated in sections 13A and 13C, and extend between the mating surface 1210 and a second surface 1212, illustrated in sections 13B and 13D. For example, the second surface 1212 of the lower supports 1232b is coupled with the interior surface 110 of the slot cap assembly 1206 and couples the slot cap assembly 1206 with the airfoil 1200. Additionally or alternatively, one or more of the lower supports 1232b may extend an alternative, different distance away from the first surfaces 312, 316 of the opposite slots 202, 204. The mating surface 1210 of each of the lower supports 1232b is coupled with the first surfaces 312, 316 of the opposite slots 202, 204. The second surface 1212 of the lower supports 1232b is coupled with the interior surface 110 of the slot cap assembly 1206. Additionally or alternatively, any upper support 1232a or lower support 1232b may have any alternative configuration.

The supports 1232 direct the cooling air that is exiting the cooling chamber 102 through the one or more impingement holes 1204 such that the cooling air is directed around the supports 1232. For example, at section 13A, at least some of the cooling air is directed around the upper and lower supports 1232a, 1232b towards the first slot 202 in the direction B in order to cool the pressure side 114 exterior surface of the airfoil 1200. Additionally, at least some of the cooling is directed around the upper and lower supports 1232a, 1232b towards the second slot 204 in the direction C in order to cool the suction side 116 exterior surface of the airfoil 1200. Optionally, section 13A may include any number of impingement holes 1204 that may direct cooling air from the cooling chamber 102 and towards the pressure side 114 and/or the suction side 116 of the airfoil 1200.

Alternatively, at section 13B, the lower supports 1232b prevent (e.g., block) cooling air from being directed through the first and second slots 202, 204. For example, the cooling air that is directed out of the cooling chamber 102 through the impingement hole 1204 is directed towards the interior surface 110 of the slot cap assembly 1206. Optionally, one or more of the lower supports 1232b may not prevent cooling air from being directed through one or more of the first or second slots 202, 204. For example, one of the lower supports 1232b may extend between the mating surface 1210 and the first surface 1209 and may direct cooling air to flow around the supports 1232 towards the first or second slots 202, 204 and out of the airfoil 1200. Optionally, one or more upper supports 1232a may prevent cooling air from being directed through the opposite slots 202, 204. Additionally or alternatively, section 13B may include plural impingement holes 1204 that direct cooling air out of the cooling chamber 102. For example, a first impingement hole may be disposed generally centered about the longitudinal axis 310 and a different, second impingement hole may be disposed between the lower support 1323b and the upper support 1232a proximate to the suction side 116 of the airfoil 1200. The first impingement hole may direct cooling air towards the interior surface 110 of the slot cap assembly 1206, and the second impingement hole may direct cooling air outside of the cooling chamber 102 and towards the suction side 116 exterior surface of the airfoil 1200.

Section 13C has a configuration similar to section 13A. For example, at least some of the cooling air is directed around the upper and lower supports 1232a, 1232b towards the first slot 202 in the direction B in order to cool the pressure side 114 exterior surface of the airfoil 1200, and at least some of the cooling is directed around the upper and lower supports 1232a, 1232b towards the second slot 204 in the direction C in order to cool the suction side 116 exterior surface of the airfoil 1200.

Section 13D has a configuration similar to section 13B. For example, the lower supports 1232b prevent (e.g., block) cooling air from being directed through the first and second slots 202, 204. For example, the cooling air that is directed out of the cooling chamber 102 through the impingement hole 1204 is directed towards the interior surface 110 of the slot cap assembly 1206.

Figures 11 and 12 illustrate one example of the airfoil 1200 including four sections (13A-D) of the slot cap assembly 1206 having an alternating pattern along the radial length 124 of the airfoil 1200. For example, the upper and lower supports 1232a, 1232b at sections 13A and 13C allow cooling air to be directed out of the airfoil 1200 and along different exterior surfaces of the airfoil 1200. Optionally, any number of sections of the airfoil 1200 may include any number of supports that may allow or prevent cooling air from being directed out of the airfoil 1200. Optionally, the airfoil 1200 may have any alternative alternating and/or non-alternating section configurations. Additionally or alternatively, the airfoil 1200 may include any number of impingement holes at any section of the airfoil 1200 that may direct cooling air out of the cooling chamber and onto different interior and/or exterior surfaces of the airfoil 1200. For example, section 13B may include three impingement holes with that direct cooling air outside of the cooling chamber 102 and towards the interior surface 110 of the slot cap assembly 1206, towards the pressure side 114 exterior surface of the airfoil 1200, and towards the suction side 116 exterior surface of the airfoil 1200.

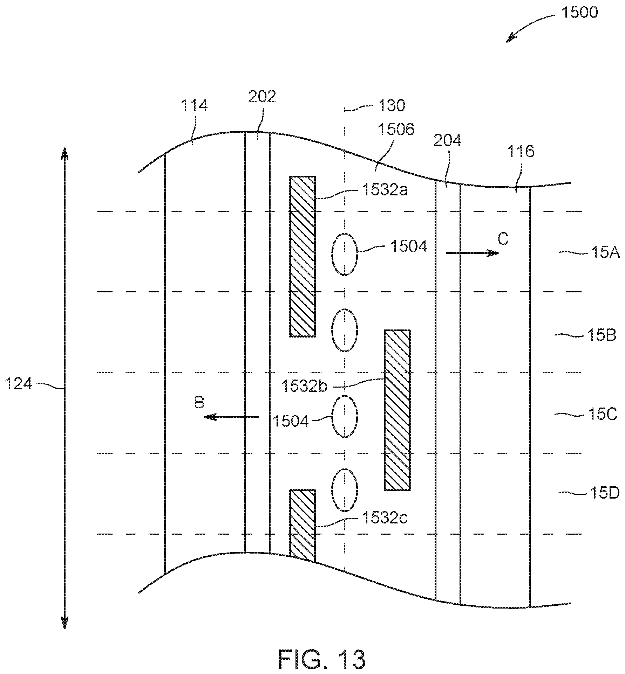

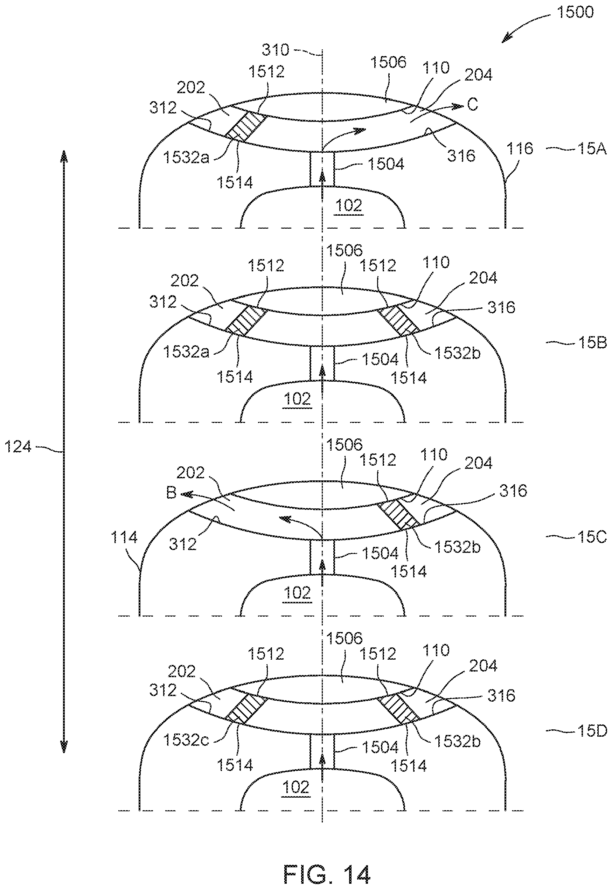

Figure 13 is a side view of an airfoil 1500 (corresponding to the airfoil 100 of Figure 1) in accordance with one embodiment. Figure 14 is a cross-sectional front view of the airfoil 1500. Figures 13 and 14 illustrate the airfoil 1500 that includes one or more supports 1532 that couple a double impingement slot cap assembly 1506 with the airfoil 1500 and direct cooling air along different exterior surfaces of the airfoil 1500 in accordance with one embodiment. Figures 13 and 14 will be discussed together.

The airfoil 1500 includes the supports 1532 that are disposed inside of the airfoil 1500. In the illustrated embodiment of Figure 13, the supports 1532 are disposed on alternating sides of the stagnation region 130 between first and second ends (e.g., 134, 136 of Figure 1) of the airfoil 1500. Optionally, the supports 1532 may be disposed on either side of the stagnation region 130 in any configuration or pattern. The supports 1532 extend semi-continuously along the radial length 124 of the airfoil 1500 between the first and second ends of the airfoil 1500. Additionally or alternatively, one or more of the supports 1532 may extend continuously along the radial length 124 of the airfoil 1500.

The supports 1532 extend to continuous full height distances between the interior surface 110 of the slot cap assembly 1506 and the first surfaces 312, 316 of the opposite slots 202, 204. For example, the supports 1532 extend between a first surface 1512 that is coupled with the interior surface 110 of the slot cap assembly 1506 and a second surface 1514 that is coupled with the first surfaces 312, 316 of the opposite slots 202, 204. For example, the supports 1532 couple the slot cap assembly 1506 with the airfoil 1500.

A first support 1532a in section 15A extends between the first surface 1512 that is coupled with the interior surface 110 of the slot cap assembly 1506 and the second surface 1514 that is coupled with the first surface 312 of the first slot 202. The first support 1532a directs the cooling air that is exiting the cooling chamber 102 through an impingement hole 1504 such that the cooling air is directed towards the second slot 204 in the direction C in order to cool the suction side 116 exterior surface of the airfoil 1500. For example, the first support 1532a is disposed between the first slot 202 and the impingement hole 1504 and prevents (e.g., blocks) cooling air from being directed through the first slot 202. Optionally, section 15A may include any number of impingement holes that may direct cooling air from the cooling chamber 102 and towards the second slot 204.

A second support 1532b in section 15C extends between the first surface 1512 that is coupled with the interior surface 110 of the slot cap assembly 1506 and the second surface 1514 that is coupled with the first surface 316 of the second slot 204. The second support 1532b directs the cooling air that is exiting the cooling chamber 102 through the impingement hole 1504 such that the cooling air is directed towards the first slot 202 in the direction B in order to cool the pressure side 114 exterior surface of the airfoil 1500. For example, the second support 1532b is disposed between the second slot 204 and the impingement hole 1504 and prevents (e.g., blocks) cooling air from being directed through the second slot 204. Optionally, section 15C may include any number of impingement holes that may direct cooling air from the cooling chamber 102 and towards the first slot 202.

In section 15B, the first and second supports 1532a, 1532b prevent (e.g., block) the cooling air from exiting the inside of the airfoil 1500. For example, the cooling air that is directed out of the cooling chamber 102 through the impingement hole 1504 is directed towards the interior surface 110 of the slot cap assembly 1506. Additionally, in section 15D, the second support 1532b and a third support 1532c prevent the cooling air from exiting the inside of the airfoil 1500.

Figures 13 and 14 illustrate one example of the airfoil 1500 including four sections (15A-D) of the slot cap assembly 1506 having an alternating pattern of supports 1532 along the radial length 124 of the airfoil 1500. For example, the first and second supports 1532a, 1532b at sections 15A and 15C allow cooling air to be directed out of the airfoil 1500 and along different exterior surfaces of the airfoil 1500. Additionally, the first, second, and third supports 1532a, 1532b, 1532c at sections 15B and 15D prevent the cooling air from being directed out of the airfoil 1500 through the first or second slots 202, 204. Optionally, any number of sections of the airfoil 1500 may include any number of supports 1532 that may allow or prevent cooling air from being directed out of the airfoil 1500. Optionally, the airfoil 1500 may have any alternative alternating and/or non-alternating section configurations.

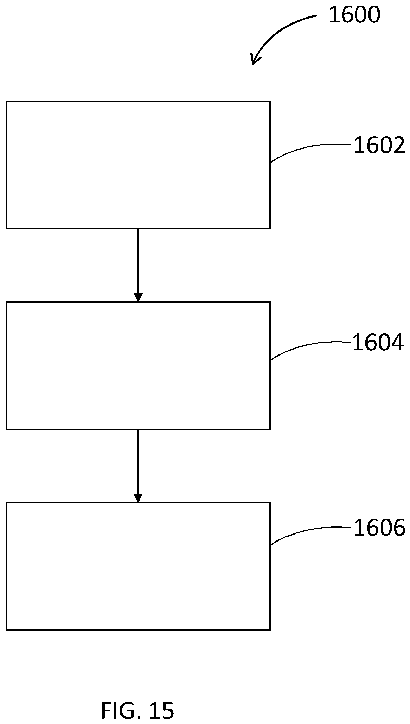

Figure 15 illustrates a flowchart of a method for manufacturing an airfoil. At 1602, a cooling chamber 102 disposed within an airfoil 100 of a turbine assembly is fluidly coupled with one or more impingement holes 104. The impingement holes 104 are configured to direct at least some of the cooling air out of the cooling chamber 102. For example, the impingement holes 104 may be disposed inside of the airfoil and provide a passage for cooling air to exit the cooling chamber of the airfoil.

At 1604, the impingement holes 104 are covered by a double impingement slot cap assembly (e.g., the slot cap assembly 106). The slot cap assembly 106 is disposed at a leading edge 112 of the airfoil 100. The slot cap assembly 106 is separated from the airfoil 100 by opposite slots 202, 204. For example, the slot cap assembly 106 is positioned a distance away from the airfoil 100 by the shape and size of the opposite slots 202, 204. The opposite slots 202, 204 are fluidly coupled with the impingement holes inside of the airfoil and under the cover of the slot cap assembly.

At 1606, the impingement holes 104 direct cooling air exiting the cooling chamber 102 through the fluidly coupled opposite slots 202, 204 to the exterior of the airfoil 100. For example, the impingement holes 104 direct at least some of the cooling air through the first slot 202 to a pressure side 114 of the airfoil 100. Additionally, the impingement holes 104 direct at least some of the cooling air through the second slot 204 to a suction side 116 of the airfoil 100.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects.

This written description uses examples to disclose several embodiments of the subject matter set forth herein, including the best mode, and also to enable a person of ordinary skill in the art to practice the embodiments of disclosed subject matter, including making and using the devices or systems. The patentable scope of the subject matter described herein is defined by the claims, and may include other examples that occur to those of ordinary skill in the art.

## Claims

1. An airfoil (100) for a turbine engine, the airfoil (100) comprising:
a cooling chamber (102) disposed inside the airfoil (100), the cooling chamber (102) configured to direct cooling air inside the airfoil (100);
an impingement hole (104) disposed inside the airfoil (100) and fluidly coupled with the cooling chamber (102), the impingement hole (104) configured to direct at least some of the cooling air out of the cooling chamber (102); and
a double impingement slot cap assembly (106) coupled with the airfoil, the double impingement slot cap assembly (106) forming a cover over the impingement hole (104), the double impingement slot cap assembly (106) configured to direct the cooling air exiting the cooling chamber in the airfoil through the impingement hole (104) along one or more exterior surfaces of the airfoil (100);
the airfoil further comprising one or more supports (132, 732, 1032, 1232, 1532) disposed inside the airfoil (100) and coupled with the double impingement slot cap assembly (106), wherein the supports (132, 732, 1032, 1232, 1532) are configured to direct the cooling air exiting the cooling chamber inside the airfoil around the supports (132, 732, 1032, 1232, 1532),
**characterised in that**
the one or more supports (132, 732, 1032, 1232, 1532) are configured to direct at least some of the cooling air exiting the cooling chamber through the impingement hole along different exterior surfaces of the airfoil (100).

2. The airfoil (100) of claim 1, wherein the double impingement slot cap assembly (106) is coupled with the airfoil (100) by the one or more supports (132, 732, 1032, 1232, 1532).

3. The airfoil (100) of claim 1, wherein the one or more supports (132, 732, 1032, 1232, 1532) are configured to extend a distance away from an interior surface of the double impingement slot cap assembly (106).

4. The airfoil (100) of claim 1, wherein the double impingement slot cap assembly (106) is elongated along a leading edge of the airfoil (100).

5. The airfoil (100) of claim 1, wherein the double impingement slot cap assembly (106) is separated from the airfoil (100) by opposite slots (202, 204) that are elongated in directions extending along one or more of a leading edge of the airfoil or a stagnation region of the airfoil.

6. The airfoil of claim 5, wherein each of the opposite slots (202, 204) separating the double impingement slot cap assembly (106) from the airfoil (100) directs at least some of the cooling air exiting the cooling chamber (102) through the impingement hole (104) along different exterior surfaces of the airfoil (100).

7. The airfoil of claim 5, wherein the one or more supports (132, 732, 1032, 1232, 1532) are configured to be operably coupled with one or more of an interior surface of the double impingement slot cap assembly (106) or one or more first surfaces of the opposite slots (202, 204).

8. The airfoil (100) of claim 5, wherein the double impingement slot cap assembly (106) is spaced apart from the airfoil (100) to form the one or more opposite slots (202, 204) that are transversely oriented with respect to the impingement hole (104) and that are configured to direct at least some of the cooling air along the one or more exterior surfaces of the airfoil (100).

9. The airfoil (100) of claim 1, wherein the impingement hole (104) is configured to direct cooling air out of the cooling chamber (102) to an interior surface of the double impingement slot cap assembly (106).

## Patentansprüche

1. Schaufelblatt (100) für ein Turbinentriebwerk, das Schaufelblatt (100) umfassend:
eine Kühlkammer (102), die innerhalb des Schaufelblatts (100) angeordnet ist, wobei die Kühlkammer (102) konfiguriert ist, um Kühlluft innerhalb des Schaufelblatts (100) zu leiten;
ein Aufprallloch (104), das innerhalb des Schaufelblatts (100) angeordnet ist und mit der Kühlkammer (102) fluidisch gekoppelt ist, wobei das Aufprallloch (104) konfiguriert ist, um mindestens einen Teil der Kühlluft aus der Kühlkammer (102) zu leiten; und
eine Doppelaufprallschlitzkappenbaugruppe (106), die mit dem Schaufelblatt gekoppelt ist, wobei die Doppelaufprallschlitzkappenbaugruppe (106) eine Abdeckung über dem Aufprallloch (104) ausbildet, wobei die Doppelaufprallschlitzkappenbaugruppe (106) konfiguriert ist, um die Kühlluft, die aus der Kühlkammer in dem Schaufelblatt durch das Aufprallloch (104) austritt, entlang einer oder mehrerer Außenoberflächen des Schaufelblatts (100) zu leiten;
das Schaufelblatt ferner umfassend einen oder mehrere Träger (132, 732, 1032, 1232, 1532), die innerhalb des Schaufelblatts (100) angeordnet und mit der Doppelaufprallschlitzkappenbaugruppe (106) gekoppelt sind, wobei die Träger (132, 732, 1032, 1232, 1532) konfiguriert sind, um die Kühlluft, die aus der Kühlkammer innerhalb des Schaufelblatts austritt, um die Träger (132, 732, 1032, 1232, 1532) herum zu leiten, **dadurch gekennzeichnet, dass**
der eine oder die mehreren Träger (132, 732, 1032, 1232, 1532) konfiguriert sind, um mindestens einen Teil der Kühlluft, die aus der Kühlkammer durch das Aufprallloch austritt, entlang verschiedener Außenoberflächen des Schaufelblatts (100) zu leiten.

2. Schaufelblatt (100) nach Anspruch 1, wobei die Doppelaufprallschlitzkappenbaugruppe (106) durch den einen oder die mehreren Träger (132, 732, 1032, 1232, 1532) mit dem Schaufelblatt (100) gekoppelt ist.

3. Schaufelblatt (100) nach Anspruch 1, wobei der eine oder die mehreren Träger (132, 732, 1032, 1232, 1532) konfiguriert sind, um sich um eine Distanz von einer Innenoberfläche der Doppelaufprallschlitzkappenbaugruppe (106) weg zu erstrecken.

4. Schaufelblatt (100) nach Anspruch 1, wobei die Doppelaufprallschlitzkappenbaugruppe (106) entlang einer Vorderkante des Schaufelblatts (100) verlängert ist.

5. Schaufelblatt (100) nach Anspruch 1, wobei die Doppelaufprallschlitzkappenbaugruppe (106) von dem Schaufelblatt (100) durch gegenüberliegende Schlitze (202, 204) getrennt ist, die in Richtungen verlängert sind, die sich entlang eines oder mehrerer einer Vorderkante des Schaufelblatts oder eines Stagnationsbereichs des Schaufelblatts erstrecken.

6. Schaufelblatt nach Anspruch 5, wobei jeder der gegenüberliegenden Schlitze (202, 204), die die Doppelaufprallschlitzkappenbaugruppe (106) von dem Schaufelblatt (100) trennen, mindestens einen Teil der Kühlluft, die aus der Kühlkammer (102) durch das Aufprallloch (104) austritt, entlang unterschiedlicher Außenoberflächen des Schaufelblatts (100) leitet.

7. Schaufelblatt nach Anspruch 5, wobei der eine oder die mehreren Träger (132, 732, 1032, 1232, 1532) konfiguriert sind, um mit einer oder mehreren von einer Innenoberfläche der Doppelaufprallschlitzkappenbaugruppe (106) oder einer oder mehreren ersten Oberflächen der gegenüberliegenden Schlitze (202, 204) wirkgekoppelt zu sein.

8. Schaufelblatt (100) nach Anspruch 5, wobei die Doppelaufprallschlitzkappenbaugruppe (106) von dem Schaufelblatt (100) beabstandet ist, um den einen oder die mehreren gegenüberliegenden Schlitze (202, 204) auszubilden, die in Bezug auf das Aufprallloch (104) quer ausgerichtet sind und die konfiguriert sind, um mindestens einen Teil der Kühlluft entlang der einen oder der mehreren Außenoberflächen des Schaufelblatts (100) zu leiten.

9. Schaufelblatt (100) nach Anspruch 1, wobei das Aufprallloch (104) konfiguriert ist, um Kühlluft aus der Kühlkammer (102) zu einer Innenoberfläche der Doppelaufprallschlitzkappenbaugruppe (106) zu leiten.

## Revendications

1. Profil (100) pour un moteur de turbine, le profil (100) comprenant :
une chambre de refroidissement (102) disposée à l'intérieur du profil (100), la chambre de refroidissement (102) étant conçue pour diriger de l'air de refroidissement à l'intérieur du profil (100) ;
un trou de contact (104) disposé à l'intérieur du profil (100) et accouplé fluidiquement à la chambre de refroidissement (102), le trou de contact (104) étant conçu pour diriger au moins une partie de l'air de refroidissement hors de la chambre de refroidissement (102) ; et
un ensemble capuchon à fente de contact double (106) accouplé au profil, l'ensemble capuchon à fente de contact double (106) formant un couvercle sur le trou de contact (104), l'ensemble capuchon à fente de contact double (106) étant conçu pour diriger l'air de refroidissement sortant de la chambre de refroidissement dans le profil à travers le trou de contact (104) le long d'une ou plusieurs surfaces extérieures du profil (100) ;
le profil comprenant en outre un ou plusieurs
supports (132, 732, 1032, 1232, 1532) disposés à l'intérieur du profil (100) et accouplés à l'ensemble capuchon à fente de contact double (106), dans lequel les supports (132, 732, 1032, 1232, 1532) sont conçus pour diriger l'air de refroidissement sortant de la chambre de refroidissement à l'intérieur du profil autour des supports (132, 732, 1032, 1232, 1532), **caractérisé en ce que**
l'un ou plusieurs supports (132, 732, 1032, 1232, 1532) sont conçus pour diriger au moins une partie de l'air de refroidissement sortant de la chambre de refroidissement à travers le trou de contact le long de différentes surfaces extérieures du profil (100).

2. Profil (100) selon la revendication 1, dans lequel l'ensemble capuchon à fente de contact double (106) est accouplé au profil (100) par l'un ou plusieurs supports (132, 732, 1032, 1232, 1532).

3. Profil (100) selon la revendication 1, dans lequel l'un ou plusieurs supports (132, 732, 1032, 1232, 1532) sont conçus pour s'étendre d'une distance à l'écart d'une surface intérieure de l'ensemble capuchon à fente de contact double (106).

4. Profil (100) selon la revendication 1, dans lequel l'ensemble capuchon à fente de contact double (106) est allongé le long d'un bord d'attaque du profil (100).

5. Profil (100) selon la revendication 1, dans lequel l'ensemble capuchon à fente de contact double (106) est séparé du profil (100) par des fentes opposées (202, 204) qui sont allongées dans des directions s'étendant le long d'un ou plusieurs d'un bord d'attaque du profil ou d'une région de stagnation du profil.

6. Profil selon la revendication 5, dans lequel chacune des fentes opposées (202, 204) séparant l'ensemble capuchon à fente de contact double (106) du profil (100) dirige au moins une partie de l'air de refroidissement sortant de la chambre de refroidissement (102) à travers le trou de contact (104) le long de différentes surfaces extérieures du profil (100).

7. Profil selon la revendication 5, dans lequel l'un ou plusieurs supports (132, 732, 1032, 1232, 1532) sont conçus pour être accouplés de manière opérationnelle à une ou plusieurs d'une surface intérieure de l'ensemble capuchon à fente de contact double (106) ou d'une ou plusieurs premières surfaces des fentes opposées (202, 204).

8. Profil (100) selon la revendication 5, dans lequel l'ensemble capuchon à fente de contact double (106) est espacé du profil (100) pour former l'une ou plusieurs fentes opposées (202, 204) qui sont orientées transversalement par rapport au trou de contact (104) et qui sont conçues pour diriger au moins une partie de l'air de refroidissement le long de l'une ou plusieurs surfaces extérieures du profil (100).

9. Profil (100) selon la revendication 1, dans lequel le trou de contact (104) est conçu pour diriger de l'air de refroidissement hors de la chambre de refroidissement (102) jusqu'à une surface intérieure de l'ensemble capuchon à fente de contact double (106).
